# DEMANDE DE BREVET EUROPEEN

(11) **EP 0 624 804 A1**
(43) Date de publication de la demande: **17.11.1994**
(21) Numéro de dépôt: 94401022.2
(22) Date de dépôt: 09.05.1994
(51) Int. Cl.: G01S 3/14, H01Q 25/04

(54) **Système de poursuite destiné à estimer l'erreur de pointage d'une antenne hyperfréquence**

(30) Priorité: 14.05.1993 FR 9305835
(71) Demandeur: ALCATEL TELSPACE, F-92734 Nanterre Cédex (FR)
(72) Inventeur: Khammouni, Alexi, F-92110 Clichy (FR); Blot, Jean-Pierre, F-06100 Nice (FR); Bourgeois, Alain, F-95600 Eaubonne (FR); Hunot, Christian, F-94700 Maisons Alfort (FR); Dutriaux, Pascal, F-95800 Cergy St. Christophe (FR)
(74) Mandataire: Renaud-Goud, Thierry

(57) **Abrégé**

L'invention concerne un système de poursuite destiné à estimer l'erreur de pointage suivant deux axes orthogonaux d'une antenne hyperfréquence en direction d'une cible, du type comportant un élément rayonnant (20) solidaire de la source primaire de l'antenne et véhiculant notamment un signal de balise transmis par la cible. Le système comporte:
- un guide d'ondes (22) couplé à l'élément rayonnant (20) et comportant une sortie d'un signal (S2) en mode de poursuite impair généré à partir du signal de balise en mode fondamental (S1), le guide d'ondes (22) étant suivi d'un réflecteur de mode (23) fournissant un signal (S3) en mode fondamental pair;
- un filtre passe-bande (25) accordé sur la fréquence du signal en mode de poursuite (S2);
- un déphaseur (27) du signal en mode de poursuite (S2) filtré fourni par le filtre passe-bande (25);
- des moyens de sommation (29) du signal de sortie du déphaseur (27) au signal en mode fondamental (S3), les moyens de sommation (29) fournissant un signal somme (S) pour chaque déphasage donné du signal en mode de poursuite filtré;
- des moyens d'exploitation (30) des signaux sommes (S) aptes à déterminer l'erreur de pointage suivant les deux axes orthogonaux de l'antenne.

## Description

Le domaine de l'invention est celui des antennes hyperfréquences directives comportant des moyens d'estimation de leur pointage en direction d'une source d'émission d'un signal modulé ou non, généralement appelé signal de balise. De tels moyens d'estimation font partie de systèmes de poursuite aptes à toujours optimiser la position de l'antenne suivant deux axes orthogonaux (par exemple en élévation et en azimut) par rapport à un émetteur et/ou récepteur de signaux, habituellement constitué par l'antenne d'un satellite, ou alors par celle d'une station terrestre, et qui sera par la suite appelé cible.

Suivre la trajectoire d'une cible ou, plus généralement, asservir la position d'une antenne sur celle d'une cible émettrice d'un signal de balise, revient à modifier la position d'une antenne de telle sorte que l'axe de son lobe principal d'émission-réception soit dirigé vers cette cible.

Différentes techniques ont été mises au point. On connaît ainsi des systèmes de poursuite par échelons dans lesquels l'information de poursuite est obtenue en déplaçant l'antenne. Cependant, ces systèmes sont lents et entraînent une usure rapide du matériel de poursuite.

On connaît également une technique basée sur la propriété que des modes d'ordres supérieurs au mode fondamental (signal de balise) sont générés dans le guide d'ondes de l'antenne à pointer lorsque la cible n'est pas dans l'axe de visée de cette antenne. La mesure de puissance d'un mode supérieur sélectionné permet ainsi de rendre compte du dépointage effectif, c'est à dire de l'erreur de positionnement de l'antenne par rapport à la cible.

Cependant, ces systèmes sont complexes et nécessitent un équipement important. Il n'est donc pas envisageable d'utiliser cette technique pour le pointage d'une antenne embarquée sur un satellite vers une station terrienne.

On connaît également un système de poursuite électronique pour antenne hyperfréquence directive où un guide d'ondes coopérant avec l'élément rayonnant de l'antenne est capable de véhiculer un mode de propagation fondamental et des modes de propagation supérieurs. Le guide comporte plusieurs cavités de conversion de modes de propagation, chaque cavité ayant un état validé dans lequel elle convertit le mode de propagation fondamental en mode de propagation supérieur.

Un système de ce type est décrit dans le brevet européen n°0.171.149 au nom de British Telecommunications Public délivré le 24 juillet 1991. Chaque cavité de conversion de mode contient un dispositif à diode pour commuter cette cavité entre l'état validé et un état invalidé dans lequel la cavité n'a pas d'effet sur le mode de propagation dans le guide d'ondes, de sorte que l'antenne est commutable entre autant d'états de réception discrets qu'il y a de cavités, chaque état de réception discret correspondant à une direction prédéterminée respective en dehors de l'axe de visée de l'antenne.

Un mode de réalisation particulièrement avantageux de ce système consiste à utiliser quatre cavités disposées à 90° l'une de l'autre autour du guide d'ondes, de telle sorte qu'il soit possible de corriger la position de l'antenne suivant deux axes orthogonaux.

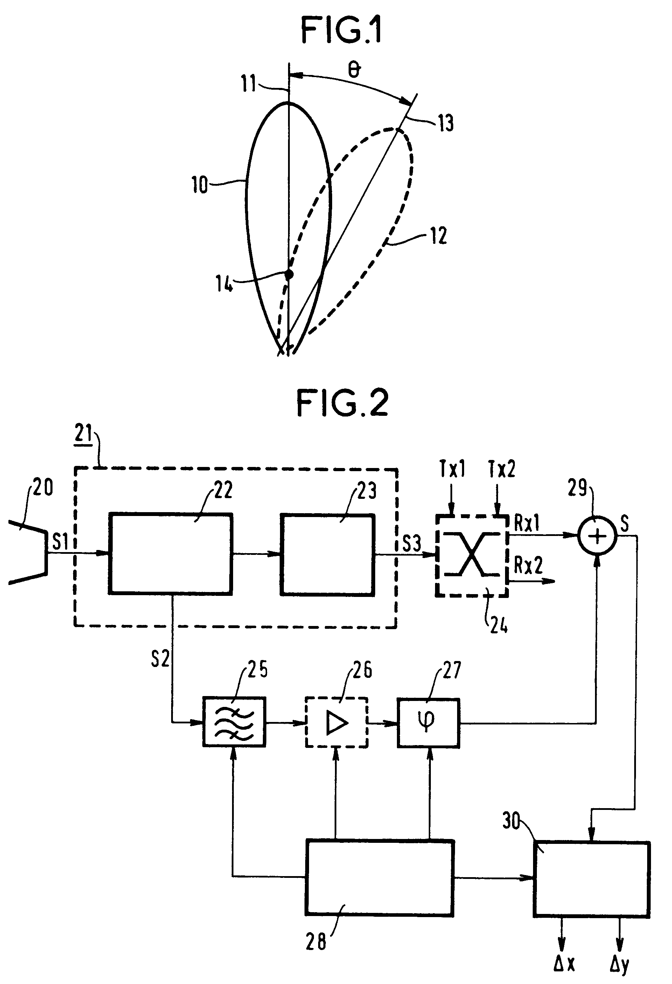

Le mode supérieur généré par la cavité active est combiné avec le mode fondamental existant pour obtenir un décalage du faisceau, conformément à la figure 1 qui représente le lobe principal d'une antenne dont la position est modifiée par activation d'une cavité.

Le lobe principal 10 d'une antenne est symétrique par rapport à un axe 11 de pointage dirigé vers une cible. L'activation d'une des cavités précédemment mentionnée fait pivoter ce lobe principal qui prend la position représentée en traits discontinus et référencée 12. Son axe 13 fait un angle ϑ avec l'axe 11 et la mesure de l'amplitude du signal au point 14 d'intersection du lobe 12 avec l'axe 11 permet de rendre compte de l'erreur de pointage de l'antenne suivant le sens associé à cette cavité. L'activation cyclique de chaque cavité permet de connaître l'erreur de pointage suivant deux axes orthogonaux (Δx et Δy).

Un des inconvénients de ce système est qu'il nécessite un nombre important de cavités, associée chacune à une diode, ainsi qu'un dispositif rendant chaque diode tour à tour passante puis bloquée. L'encombrement présenté est important du fait du nombre de cavités utilisées, et le coût d'un tel système est donc élevé.

Par ailleurs, ce système est prévu pour travailler à fréquence fixe et n'est donc pas agile en fréquence. En pratique, le pointage de l'antenne associée est réalisé en recevant un signal de balise de fréquence donnée. Si la fréquence balise change, le pointage ne peut plus être assuré dans la totalité de la bande car les cavités ont des dimensions adaptées autour d'une fréquence prédéterminée et les diodes ont une position fixe. Ceci présente un inconvénient important lorsqu'une antenne terrestre doit être pointée vers un satellite travaillant à fréquences balises multiples puisqu'il est alors nécessaire de prévoir autant d'antennes terrestres qu'il y a de fréquences balises. Evidemment, un tel système à pluralité d'antennes n'est pas apte à être embarqué sur un satellite pour des raisons d'encombrement et de poids.

Enfin, la déviation du faisceau est constante, c'est à dire que l'angle ϑ est fixe. Ainsi, si l'amplitude mesurée en 14 (fig.1) n'est pas suffisamment importante, un bruit de mesure important en résulte. Il est alors nécessaire d'adapter le système de traitement destiné à mesurer l'amplitude du point 14 à chaque antenne.

La présente invention a notamment pour objectif de pallier ces inconvénients.

Plus précisément, un des objectifs de l'invention est de fournir un système de poursuite d'une antenne directive se substituant avantageusement aux systèmes existants.

Un autre objectif est de fournir un tel dispositif qui puisse être identique quelles que soient les fréquences balises utilisées, c'est à dire qui soit agile en fréquence.

Un objectif complémentaire est de permettre de faire varier simplement la déviation du faisceau de l'antenne, afin d'adapter le rapport signal sur bruit au système de traitement rendant compte de l'erreur de pointage suivant les deux axes orthogonaux.

Ces objectifs, ainsi que d'autres qui apparaîtront par la suite, sont atteints grâce à un système de poursuite destiné à estimer l'erreur de pointage suivant deux axes orthogonaux d'une antenne hyperfréquence en direction d'une cible, du type comportant un élément rayonnant solidaire de l'antenne et véhiculant notamment un signal de balise transmis par la cible, ce système étant caractérisé en ce qu'il comporte:
- un guide d'ondes couplé à l'élément rayonnant et comportant une sortie d'un signal en mode de poursuite impair généré à partir du signal de balise en mode fondamental, le guide d'ondes étant suivi d'un réflecteur de mode fournissant un signal en mode fondamental pair;
- un filtre passe-bande accordé sur la fréquence du signal en mode de poursuite impair;
- un déphaseur du signal en mode de poursuite filtré fourni par le filtre passe-bande;
- un dispositif de commande pilotant le déphaseur;
- des moyens de sommation du signal de sortie du déphaseur au signal en mode fondamental fourni par le réflecteur de mode, ces moyens de sommation fournissant un signal somme pour chaque déphasage donné du signal en mode de poursuite filtré;
- des moyens d'exploitation des signaux sommes aptes à déterminer l'erreur de pointage suivant lesdits deux axes orthogonaux de l'antenne, les moyens d'exploitation étant pilotés par le dispositif de commande;

le dispositif de commande pilotant le déphaseur pour obtenir n signaux déphasés de 2π/n les uns par rapport aux autres pour permettre l'exploitation des signaux sommes par les moyens d'exploitation, n étant supérieur ou égal à quatre.

Ainsi, en extrayant le signal en mode de poursuite impair, il est possible de lui faire subir des traitements qui permettront d'estimer les erreurs de pointage.

Avantageusement, le dispositif de commande pilote le déphaseur pour que celui-ci déphase le signal en mode de poursuite impair qui lui est appliqué de manière continue.

Dans un autre mode de réalisation de l'invention, le système de poursuite comporte:
- un guide d'ondes comportant n sorties de signaux en mode de poursuite impair déphasés entre eux de 2π/n obtenus à partir du signal de balise en mode fondamental, n étant au moins égal à quatre, le guide d'ondes étant suivi par un réflecteur de mode fournissant le signal balise en mode fondamental pair;
- un multiplexeur piloté par un dispositif de commande fournissant tour à tour chacun des signaux déphasés de 2π/n sur sa sortie;
- un filtre passe-bande accordé sur la fréquence balise du signal en mode de poursuite et recevant le signal de sortie du multiplexeur;
- des moyens de sommation du signal de sortie du filtre passe-bande au signal en mode fondamental fourni par le réflecteur de mode, les moyens de sommation fournissant un signal somme pour chaque signal issu du multiplexeur;
- des moyens d'exploitation des signaux sommes aptes à déterminer l'erreur de pointage suivant deux axes orthogonaux de l'antenne, ces moyens d'exploitation étant pilotés par le dispositif de commande.

Chaque sortie de signal est soit constituée par une fente réalisée dans le guide d'ondes, soit par une sonde qui pénètre dans ce guide d'ondes.

Avantageusement, le filtre passe-bande est agile en fréquence. Il peut être suivi d'un amplificateur à gain variable.

Le mode fondamental est préférentiellement TE₁₁ ou HE₁₁ et le mode de poursuite est choisi parmi les modes suivants: TM₀₁, TE₀₁, HE₂₁, TE₂₁, TE₂₀ et TE₀₂.

D'autres caractéristiques et avantages de l'invention apparaîtront à la lecture de la description suivante de modes de réalisation préférentiels, donnés à titre illustratif et non limitatif, et des dessins annexés dans lesquels:
- la figure 1 représente la variation de position du lobe principal d'une antenne lorsqu'un mode supérieur est excité, le mode supérieur venant se sommer au mode fondamental pour provoquer une déviation du lobe principal de l'antenne;
- la figure 2 est un schéma synoptique d'un premier mode de réalisation de l'invention;
- la figure 3 est un schéma synoptique d'un deuxième mode de réalisation de l'invention;
- la figure 4 est une vue schématique en perspective du système de poursuite de l'invention correspondant au mode de réalisation de la figure 2;
- la figure 5 représente la variation en degrés de la phase du signal S1 en fonction de l'angle de rayonnement du cornet, le paramètre étant la valeur du déphasage, cette variation de phase étant mesurée dans un plan de référence pour un déphasage nul;
- la figure 6 représente la variation en degrés de la phase du signal S1 en fonction de l'angle de rayonnement du cornet, le paramètre étant l'amplification de signal apportée par l'amplificateur de la figure 2.

Le système représenté à la figure 2 comporte un élément rayonnant 20, par exemple constitué par un cornet, corrugué ou non, destiné à émettre et/ou recevoir des signaux hyperfréquence. L'élément rayonnant 20 est placé au centre d'une antenne, par exemple de type cassegrain, à proximité du réflecteur de cette antenne. Le mode fondamental au niveau de l'antenne est généralement HE₁₁ (pour un cornet corrugué) dans les systèmes de transmission par satellites.

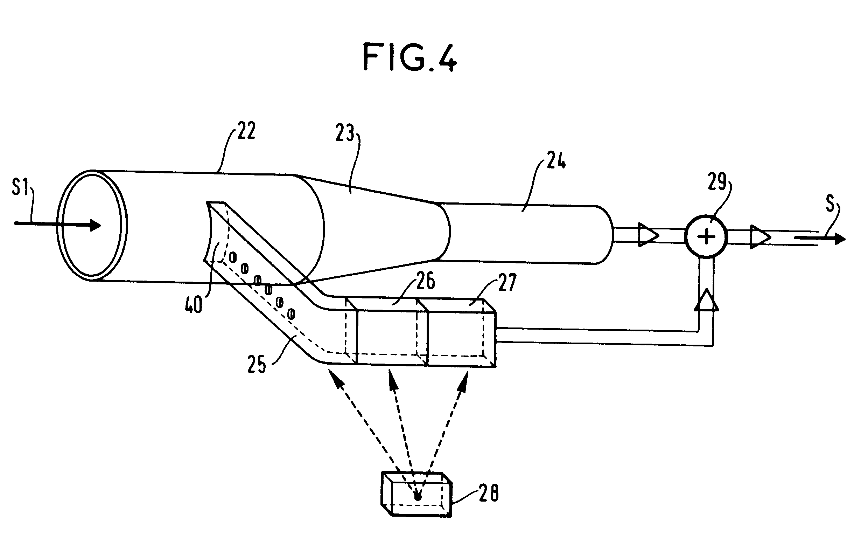

Le signal S1 issu de l'élément rayonnant 20 est appliqué à un générateur de mode 21 apte à générer un mode supérieur à partir du mode fondamental du signal S1 dans ce générateur de mode. Le générateur de mode 21 représenté comprend un guide d'ondes 22 véhiculant un mode fondamental pair, par exemple le mode TE₁₁, et comportant une fente unique (représentée sur la figure 4 et référencée 40), formant sortie de signal et destinée à extraire du mode fondamental un mode supérieur. Cela revient à exciter un mode supérieur compatible avec un dépointage du faisceau principal, par exemple le mode TM₀₁.

La sortie du guide d'ondes 22 est couplée à un réflecteur de mode 23 constitué par une transition adaptée, de longueur λg/4, destinée à réfléchir les signaux hyperfréquence de mode TM₀₁ vers le guide 22, en phase avec le signal S2, de sorte que ces signaux se somment de manière constructive.

On obtient ainsi des signaux S2 en mode impair, par exemple TN₀₁, et S3 en mode fondamental pair, par exemple TE₁₁, à la sortie du générateur de mode 21.

Le signal S2 est appliqué à un filtre passe-bande 25 dont la fréquence centrale est celle de la fréquence balise de la cible émettrice de cette fréquence balise.

Dans un mode de réalisation avantageux, le filtre 25 est un filtre agile en fréquence. Il est ainsi possible de sélectionner électroniquement ou mécaniquement la fréquence balise de la cible sur laquelle l'antenne doit être pointée.

Le filtre 25 est suivi d'un amplificateur 26 optionnel permettant de changer l'amplitude de la dérivation du faisceau pour rendre plus aisée, dans certains cas, l'acquisition et le traitement du signal S2 filtré.

L'amplificateur 26 est suivi d'un déphaseur variable 27 qui a pour fonction de pointer le faisceau de l'antenne suivant une direction quelconque dans l'espace formant un angle constant avec l'axe de référence de l'antenne. Le déphaseur 27 est piloté par un dispositif de commande 28, pilotant également le filtre 25 et l'amplificateur 26. Le pilotage du déphaseur 27 peut être de type conique classique (variation continue de la phase du signal S2 filtré et éventuellement amplifié) ou alors de type discret. En pilotage discret, il est par exemple possible de déphaser successivement et cycliquement le signal appliqué à l'entrée du déphaseur de 0°, 90°, 180° et 270°. On oriente ainsi le diagramme de rayonnement de l'antenne suivant quatre directions perpendiculaires entre elles. Pour chacune de ces valeurs de déphasage, le signal de sortie du déphaseur 27 correspond à l'amplitude du signal balise reçu sur un des quatre axes perpendiculaires à l'axe de visée de l'antenne. Les amplitudes des signaux de sortie du déphaseur 27 sont égales entre elles lorsque l'antenne est correctement pointée. De manière plus générale, le déphaseur fournit successivement des signaux déphasés de 2π/n, avec n étant supérieur ou égal à quatre.

L'estimation de l'erreur de pointage est effectuée à l'aide de moyens de sommation 29 recevant d'une part le signal de sortie du déphaseur 27 et d'autre part le signal S3 du générateur de mode 21. Dans le mode de réalisation représenté, le signal S3 est appliqué à un multiplexeur 24 recevant deux signaux d'émission TX1 et TX2, et correspond au signal Rx1. Un second signal de réception, référencé Rx2, est disponible. Le signal somme S est appliqué à des moyens d'exploitation 30 aptes à déterminer l'erreur de pointage de l'antenne. Les moyens d'exploitation 30 sont pilotés par le dispositif de commande 28 et fournissent des signaux Δx et Δy correspondant respectivement à l'erreur suivant deux axes orthogonaux (par exemple en azimut et en élévation) du pointage de l'antenne. Ces signaux d'erreur peuvent être ensuite exploités pour corriger la position de l'antenne pour que son lobe principal soit dirigé vers la cible émettrice de la fréquence balise.

Le principal avantage de ce mode de réalisation est que des signaux d'erreur de pointage de l'antenne peuvent être obtenus à l'aide d'une fente unique par laquelle le signal S2 est extrait. L'estimation selon les quatre directions perpendiculaires à celle de pointage de l'antenne est réalisée par un déphaseur unique associé aux moyens d'exploitation 30 des signaux somme. De plus, ce système est agile en fréquence puisqu'il suffit de modifier la fréquence centrale du filtre 25 pour considérer d'autres fréquences balises, provenant ou non d'un même satellite cible.

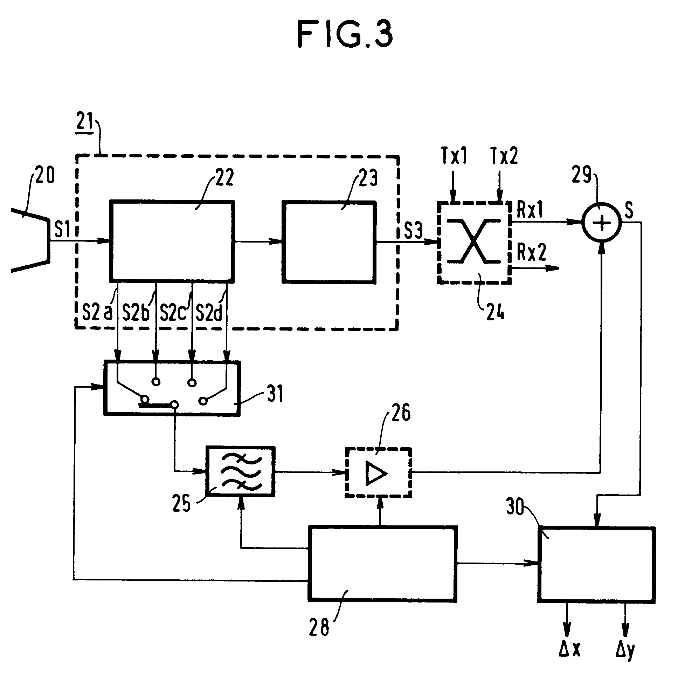

La figure 3 est un schéma synoptique d'un deuxième mode de réalisation de l'invention.

Dans ce mode de réalisation, le guide d'ondes 22 est pourvu de quatre fentes disposées à 90° l'une de l'autre. Le signal de sortie de chaque fente est donc en quadrature avec les signaux de sortie des fentes adjacentes. Les signaux de sortie des fentes sont notés S2a à S2d et appliqués à un multiplexeur 31 dont la sortie est reliée au filtre passe-bande 25. La sortie du filtre 25 est couplée à un amplificateur 26 optionnel fournissant les signaux filtrés et amplifiés au rythme de la commande du multiplexeur 31. Celui-ci est piloté par le dispositif de commande 28. Ce mode de réalisation est équivalent au premier où le déphaseur 27 est commandé pour déphaser le signal qui lui est appliqué de 0°, 90°, 180° et 270°. Il est bien entendu également possible d'intercaler un déphaseur tel que 27 (fig.2) entre le filtre 25 et le sommateur 29 pour pouvoir par exemple effectuer une poursuite de type conique classique.

Le nombre de signaux en mode poursuite, et donc le nombre de cavités équipant le guide d'ondes 22, n'est bien entendu pas limitatif et on peut extraire n signaux déphasés entre eux d'un angle 2π/n.

La figure 4 est une vue schématique en perspective du système de poursuite de l'invention correspondant au mode de réalisation de la figure 2.

Le système de poursuite représenté est réalisé en technologie guide d'ondes et les références utilisées pour identifier les différents éléments sont identiques à celles utilisées pour décrire la figure 2. La fente 40 formant sortie de signal en mode de poursuite est pratiquée dans le guide d'ondes 22. L'extraction du mode de poursuite peut également être obtenu à l'aide d'une sonde pénétrant dans le guide 22. Cette sonde est par exemple constituée par l'âme d'un câble coaxial relié au filtre 25. Le filtre 25 est ici muni de vis d'accord permettant de régler sa fréquence centrale. Bien entendu, une commande électronique de ce filtre 25 est également envisageable.

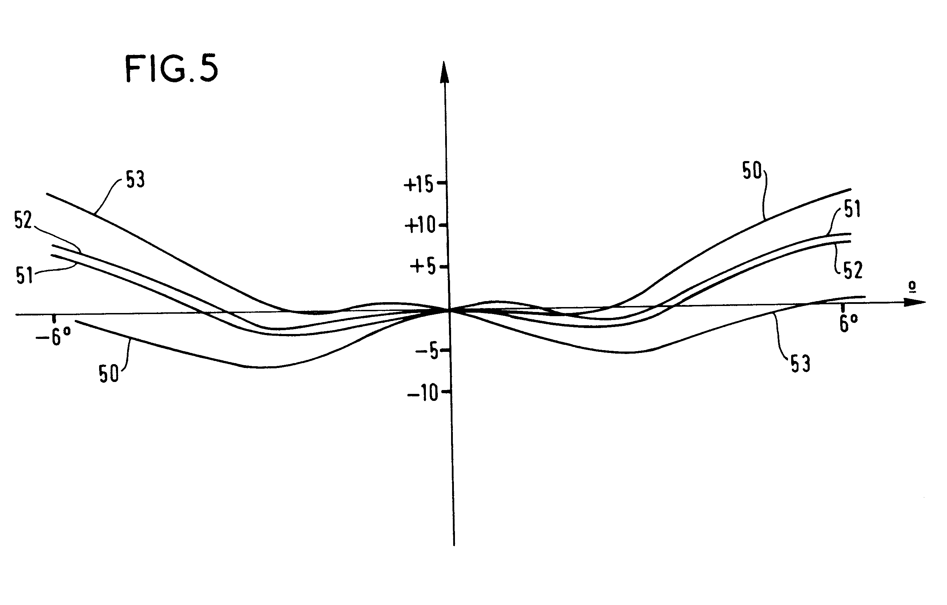

La figure 5 représente la variation de la phase du signal S1 en fonction de l'angle de rayonnement du cornet, le paramètre étant la valeur du déphasage, cette variation de phase étant mesurée dans un plan de référence pour un déphasage nul. Ces courbes ont été obtenues pour une fréquence balise de 3950 NHz, l'amplificateur 26 de la figure 2 apportant un gain de 6 dB.

Les courbes 50 à 53 correspondent à la variation de la phase du signal S1 pour des déphasages respectifs de 90°, 180°, 0° et 270° en fonction de l'angle de rotation de la source. Dans le plan de référence considéré, le signal S1 reste identique pour des déphasages discrets de 0° et 180° alors qu'il varie de manière importante et dissymétrique pour des déphasages de 90° et 270°.

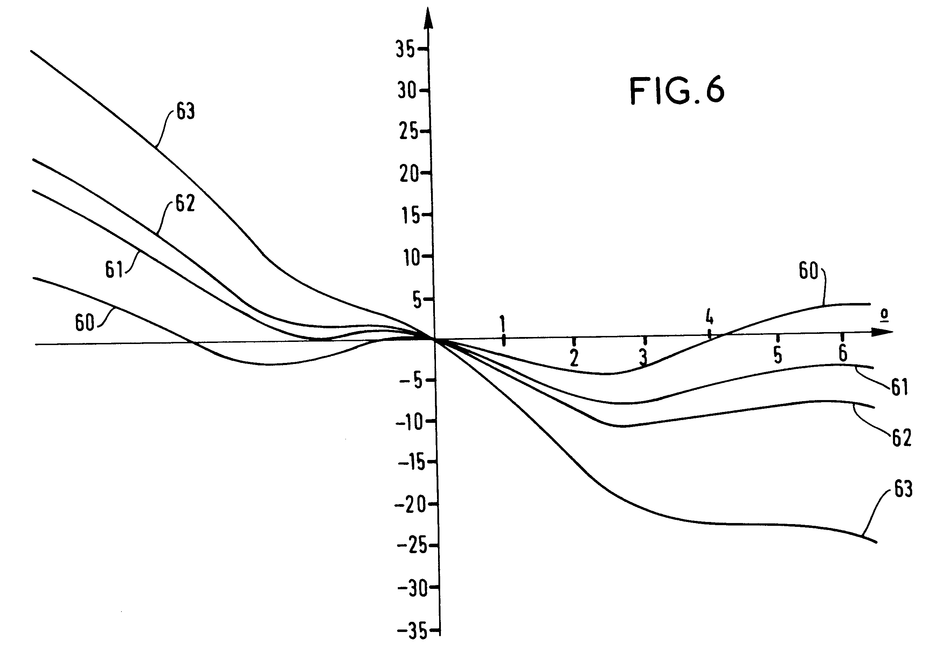

La figure 6 représente la variation de la phase du signal S1 en fonction de l'angle de rayonnement du cornet, le paramètre étant l'amplification du signal de poursuite apportée par l'amplificateur 26. Ces courbes ont été obtenues pour une fréquence balise de 3950 MHz, un déphasage de 270° et sont représentées dans le même plan de référence que celui de la figure 5.

Les courbes 60 à 63 représentent la variation de la phase du signal S1 pour des amplifications respectives de 0, 6, 10 et 20 dB. L'amplification apportée permet de modifier la déviation du faisceau, c'est à dire l'angle ϑ de la figure 1. On peut ainsi augmenter aisément le rapport signal sur bruit de la mesure de l'amplitude du signal somme S et adapter le système de traitement destiné à mesurer cette amplitude à chaque antenne.

L'amplificateur 26 est préférentiellement un amplificateur à gain variable déterminé par le dispositif de commande 28.

Tous les modes impairs de poursuite présentent un minimum d'amplitude lorsque le mode fondamental pair présente un maximum d'amplitude et deux maximums de part et d'autre de ce minimum d'amplitude. Leur sommation avec le mode fondamental provoque une déviation du faisceau principal en sortie d'antenne. Le mode fondamental pair est préférentiellement TE₁₁ ou HE₁₁ et le mode de poursuite impair est choisi parmi les modes TM₀₁, TE₀₁, HE₂₁, TE₂₁, TE₂₀ et TE₀₂.

## Revendications

1. Système de poursuite destiné à estimer l'erreur de pointage suivant deux axes orthogonaux d'une antenne hyperfréquence en direction d'une cible, du type comportant un élément rayonnant (20) solidaire de ladite antenne et véhiculant notamment un signal de balise transmis par ladite cible, caractérisé en ce qu'il comporte:
- un guide d'ondes (22) couplé audit élément rayonnant (20) et comportant une sortie d'un signal (S2) en mode de poursuite impair généré à partir dudit signal de balise en mode fondamental (S1), ledit guide d'ondes (22) étant suivi d'un réflecteur de mode (23) fournissant un signal (S3) en mode fondamental pair;
- un filtre passe-bande (25) accordé sur la fréquence dudit signal en mode de poursuite impair (S2);
- un déphaseur (27) dudit signal en mode de poursuite (S2) filtré fourni par ledit filtre passe-bande (25);
- un dispositif de commande (28) pilotant ledit déphaseur (27);
- des moyens de sommation (29) du signal de sortie dudit déphaseur (27) audit signal en mode fondamental (S3) fourni par ledit réflecteur de mode (21), lesdits moyens de sommation (29) fournissant un signal somme (S) pour chaque déphasage donné dudit signal en mode de poursuite filtré;
- des moyens d'exploitation (30) des signaux sommes (S) aptes à déterminer l'erreur de pointage suivant lesdits deux axes orthogonaux (Δx, Δy) de ladite antenne, lesdits moyens d'exploitation (30) étant pilotés par ledit dispositif de commande (28);
ledit dispositif de commande (28) pilotant ledit déphaseur (27) pour obtenir n signaux déphasés de 2π/n les uns par rapport aux autres pour permettre l'exploitation desdits signaux sommes (S) par lesdits moyens d'exploitation (30), n étant supérieur ou égal à quatre.

2. Système selon la revendication 1, caractérisé en ce que ledit dispositif de commande (28) pilote ledit déphaseur (27) pour que celui-ci déphase le signal en mode de poursuite qui lui est appliqué de manière continue.

3. Système de poursuite destiné à estimer l'erreur de pointage suivant deux axes orthogonaux d'une antenne hyperfréquence en direction d'une cible, du type comportant un élément rayonnant (20) solidaire de ladite antenne et véhiculant notamment un signal de balise transmis par ladite cible, caractérisé en ce qu'il comporte:
- un guide d'ondes (22) comportant n sorties de signaux (S2a, S2b, S2c, S2d) en mode de poursuite impair déphasés entre eux de 2π/n obtenus à partir dudit signal de balise (S1) en mode fondamental, n étant supérieur ou égal à quatre, ledit guide d'ondes (22) étant suivi par un réflecteur de mode (23) fournissant ledit signal balise en mode fondamental pair (S3);
- un multiplexeur (31) piloté par un dispositif de commande (28) fournissant tour à tour chacun desdits signaux (S2a, S2b, S2c, S2d) déphasés de 2π/n sur sa sortie;
- un filtre passe-bande (25) accordé sur la fréquence balise du signal en mode de poursuite (S2) et recevant ledit signal de sortie dudit multiplexeur (31);
- des moyens de sommation (29) du signal de sortie dudit filtre passe-bande au signal en mode fondamental (S3) fourni par ledit réflecteur de mode (23), lesdits moyens de sommation (29) fournissant un signal somme (S) pour chaque signal (S2a, S2b, S2c, S2d) issu dudit multiplexeur (31);
- des moyens d'exploitation (30) des signaux sommes (S) aptes à déterminer l'erreur de pointage suivant lesdits deux axes orthogonaux (Δx, Δy) de ladite antenne, lesdits moyens d'exploitation (30) étant pilotés par ledit dispositif de commande (28).

4. Système selon l'une des revendications 1 à 3, caractérisé en ce que chaque sortie de signal est constituée par une fente (40) réalisée dans ledit guide d'ondes (22).

5. Système selon l'une des revendications 1 à 3, caractérisé en ce que chaque sortie de signal est constituée par une sonde qui pénètre dans ledit guide d'ondes (22).

6. Système selon l'une des revendications 1 à 5, caractérisé en ce que ledit filtre passe-bande (25) est agile en fréquence.

7. Système selon l'une des revendications 1 à 6, caractérisé en ce que ledit filtre passe-bande (25) est suivi d'un amplificateur (26) à gain variable.

8. Système selon l'une des revendications 1 à 7, caractérisé en ce que ledit mode fondamental est TE₁₁ ou HE₁₁ et en ce que ledit mode de poursuite est choisi parmi les modes TM₀₁, TE₀₁, HE₂₁, TE₂₁, TE₂₀ et TE₀₂.
